# FASCICULE DE BREVET EUROPEEN

(11) **EP 0 696 417 B1**
(45) Date de publication et mention de la délivrance du brevet: **12.04.2000**
(21) Numéro de dépôt: 95440049.5
(22) Date de dépôt: 02.08.1995
(51) Int. Cl.: A01G 3/04

(54) **Machine de coupe utilisable notamment pour la taille ou prétaille de vignes palissées**
Schneidemaschine, insbesondere zum Gebrauch für den Schnitt und Vorschnitt der Weinstöcken in Drahtrahmenanlagen
Cutting machine, especially to be used for pruning and pre-pruning tied vines

(30) Priorité: 11.08.1994 FR 9410059
(43) Date de publication de la demande: 14.02.1996
(73) Titulaire: BINGER FRANCE SARL, 68127 Niederhergheim (FR)
(72) Inventeur: Andelfinger, Georges, F-68127 Niederhergheim (FR)

(56) Documents cités:
- EP-A- 0 147 344
- FR-A- 2 576 482
- FR-A- 2 670 079

## Description

La présente invention porte sur une machine de coupe utilisable notamment pour la taille ou prétaille de vignes palissées, selon le préambule de la revendication 1.

La présente demande procède d'une division de la demande FR.9410059 de la titulaire.

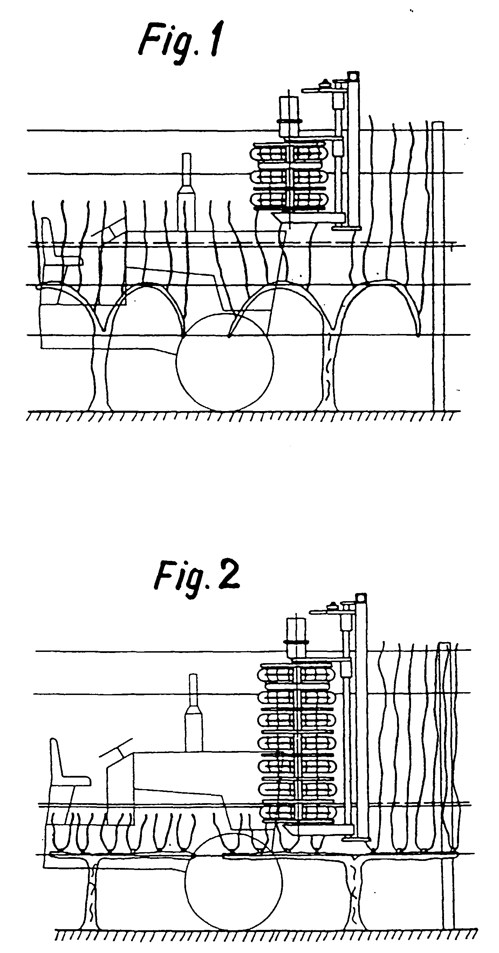

Avant d'énoncer le problème que l'invention se propose de résoudre, rappelons en premier lieu que les vignes palissées se présentent sous différents types de taille. Citons parmi ceux-ci la taille en demi-arc ou taille en guyot (Fig. 1) ou la taille dite en cordon de royat (Fig. 2) et que les travaux de taille sont effectués sur une période d'environ 6 mois après les vendanges. Avec le type de taille guyot, le niveau de coupe est relativement haut, les sarments sont souples et la végétation est en général peu importante et assez régulière. La mise en oeuvre de machines de coupe dans les vignes répondant à ce type de taille n'est pas trop délicate (sous réserve d'éventuelles difficultés invoquées plus loin). En revanche, avec le type de taille en cordon, le niveau de coupe est bas (en général directement au-dessus du fil inférieur), les sarments-porteurs ou coursons sont rigides et la végétation est dense et assez irrégulière. On comprend qu'il est ici nettement moins évident et moins facile d'exécuter un travail de qualité. D'une part, les sarments coupés restant accrochés aux fils par des vrilles doivent être dégagés ou tirés hors desdits fils. D'autre part, le ménagement des coursons (ou sarments-porteurs) est d'importance primordiale, la rupture ou l'endommagement de ceux-ci compromettant la récolte future.

La solution au problème de tirage des sarments est exposée notamment dans la demande de base dont la présente demande est issue.

L'inventeur a observé que les moyens mis en oeuvre pour résoudre le problème de tirage des sarments coupés tendent - en l'absence de dispositif adéquat - à aggraver les dommages sur les coursons.

D'une part, l'opération de tirage desdits sarments conduit en effet à instaurer des différences dans les vitesses tangentielles entre les outils d'un module et les outils de l'autre module. Plus ces vitesses et, surtout, ces différences sont grandes, plus graves et plus importantes seront les dommages sur les coursons, ou pour le moins les risques de dommages.

Mais d'autre part, en se limitant à apporter une solution au seul problème de ménagement des coursons, le problème de tirage des sarments coupés ne sera plus, lui, résolu.

Il convient donc de concilier ces deux tendances contraires, c'est-à-dire de proposer les moyens permettant de ménager les coursons, tout en ne compromettant pas l'opération précitée d'extraction des sarments coupés hors des fils de palissage.

EP-0,147,344 divulgue une machine de coupe du genre défini en introduction présentant une tête de coupe avec deux ensembles de coupe 1, 2 identiques comportant chacun un empilage d'outils de coupe 3 travaillant par cisaillement. L'outil de coupe comprend deux éléments. L'élément extérieur 4, appelé cage, est formé d'un disque à denture périphérique et à nervures radiales soudées sur chacune des faces du disque, le nombre de nervures sur chaque face étant égal au nombre de dents, une nervure s'étendant chaque fois de la zone centrale à l'extrémité de la dent correspondante, il est soumis à un entraînement continu en rotation et remplit la fonction de lame et. théoriquement, une fonction de protection L'élément intérieur 5 est un disque présentant sur une partie de sa périphérie des dents ; il est fixe, plaqué contre le disque de l'élément extérieur et remplit la fonction de contre-lame. Les outils d'un ensemble peuvent interpénétrer dans des espaces ménagés entre-outils de l'autre ensemble, l'ouverture des ensembles 1, 2 étant actionné au moyen d'un vérin 6 commandé par l'opérateur, les supports 8, 9 se trouvant sous l'action de ressorts de rappel.

La machine décrite dans DE-40 37 590 ou FR-91 14502 part d'un concept tout à fait différent, lequel permet de réduire les inconvénients de la machine selon EP-0,147,344, mais pas encore de manière satisfaisante.

La machine de coupe selon FR-91 14502 présente une tête de coupe avec deux modules 10, 20 non identiques avec fonction d'interpénétration. L'une 10 des modules comporte un empilage d'outils de coupe 12, l'autre 20 un empilage d'outils-ameneurs 22 (ci-après ameneurs). L'outil de coupe comprend deux éléments. L'élément extérieur 13 est une cage formée de deux disques reliés à leur périphérie par des arceaux 14 en forme de "U" ; il est soumis à un entraînement libre en rotation et remplit une fonction de protection (poteaux, fils, tendeurs, élément intérieur). L'élément intérieur 15 est une scie circulaire effectuant la coupe ; elle est enveloppée par la cage, indépendante de celle-ci et entraînée en rotation à une vitesse de l'ordre de 1000 t/min.. L'ameneur est formé d'un disque présentant une denture 23 à sa périphérie, les flancs de ces dents étant droits et ouverts à un angle de 90°. Le module d'ameneurs est soumis à un entraînement continu en rotation. L'ouverture des ensembles 10, 20 est actionnée par un vérin commandé par l'opérateur.

Les machines de coupe de l'art antérieur visent - d'ailleurs sans y parvenir de manière satisfaisante - à résoudre en particulier le problème de tirage des sarments coupés. Mais surtout, aucune d'entre elles ne comporte de dispositif pour ménager les coursons.

Le but de la présente invention est de pallier ce grave inconvénient. Il est atteint, grâce aux moyens définis dans la revendication 1.

On va décrire à présent en détail, à titre d'exemple non limitatif, une forme d'exécution du dispositif selon l'invention, équipant la machine de coupe (ou prétailleuse), à l'appui des dessins annexés où
- la Fig. 3: montre une vue arrière (c'est-à-dire en regardant dans le sens d'avancement) des modules de coupe et des ameneurs en phase d'interpénétration, le module ameneur étant pourvu du dispositif de ménagement des coursons,
- la fig. 4: représente une vue de dessus de la prétailleuse,
- la Fig. 5: est une vue en plan partielle d'un ameneur,
- la Fig. 6: est une demi-coupe de l'ameneur selon une ligne VI - VI de la figure 5, et
- la Fig. 7: est une vue en coupe du dispositif de ménagement des coursons,
(étant rappelé que les figures 1 à 2 ont été mentionnées pour situer les domaines d'applications typiques des prétailleuses).

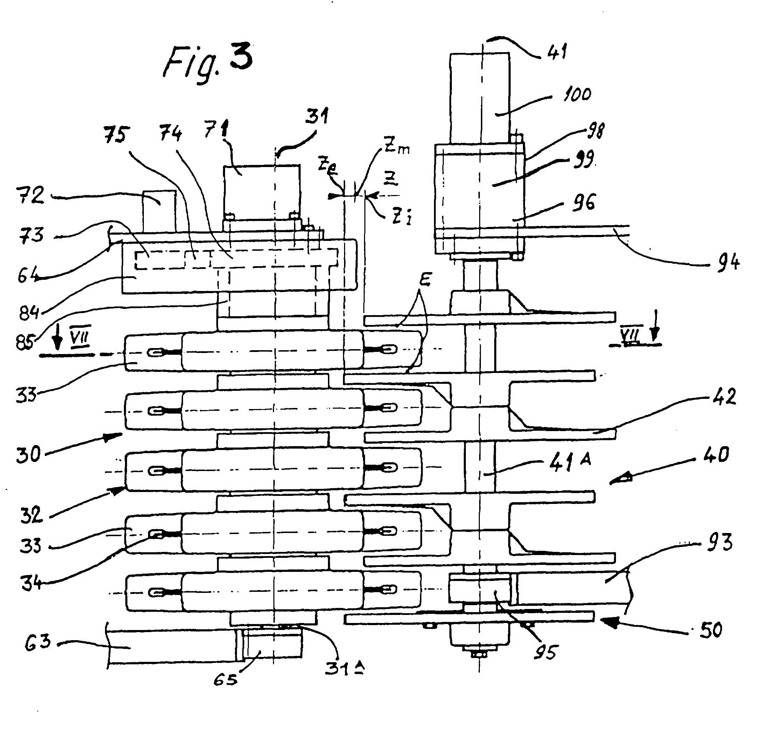

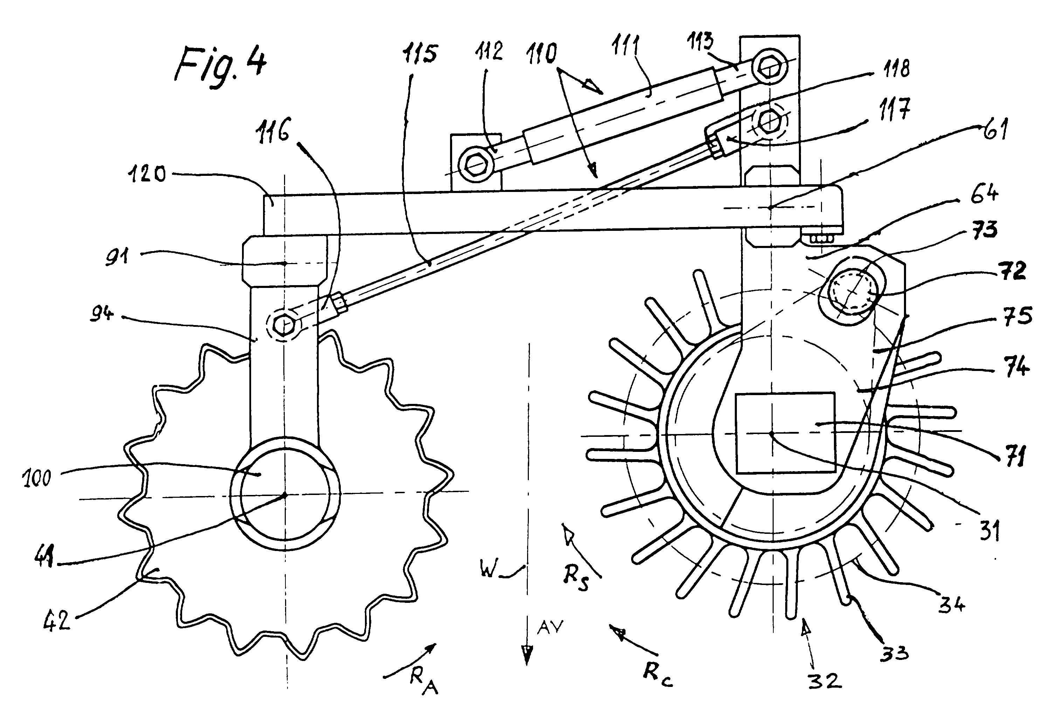

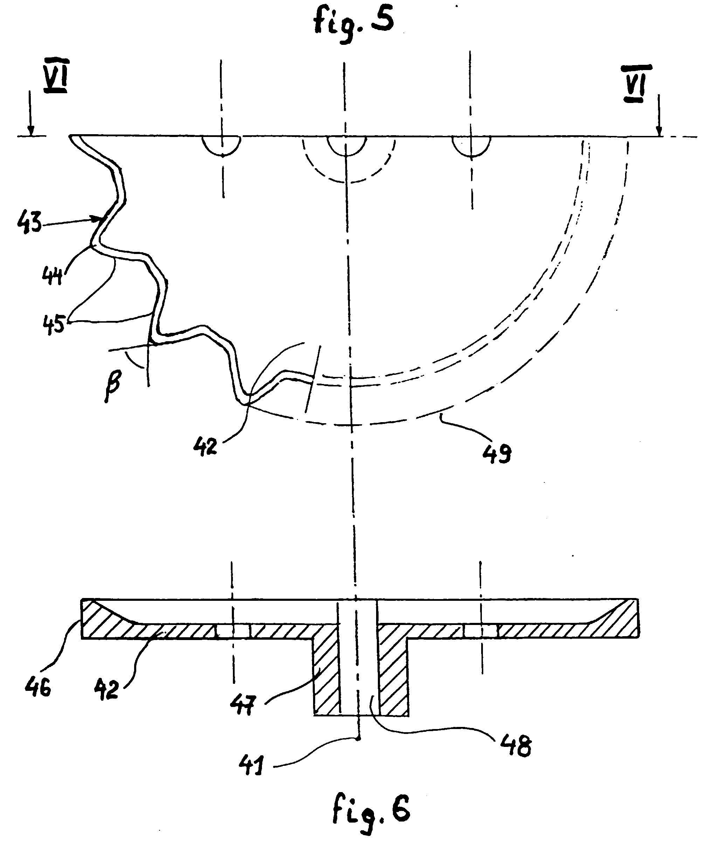

Les figures 3 et 4 montrent la machine de coupe (ou prétailleuse) appelée à être agencée, par exemple, dans la zone avant droite ou latérale droite d'un tracteur non représenté. Le sens d'avancement de la prétailleuse est symbolisé par la flèche AV sur la figure 6, tandis qu'à la figure 5, la prétailleuse est vue de l'arrière, l'observateur étant placé en regardant dans le sens d'avancement. On aperçoit un module de coupe 30 d'axe 31 et un module ameneur 40 d'axe 41. Le module de coupe 30 comprend un empilage d'outils de coupe 32 sur un arbre 31A, chaque outil 32 comportant un élément extérieur, c'est-à-dire une cage 33 et un élément intérieur de coupe, c'est-à-dire une scie 34.

Le module de coupe est porté par un support 60 pivotable autour d'un axe 61. Seuls les bras de dessous 63 et de dessus 64 du support 60 sont représentés à la figure 5.

Les cages sont soumises à un entraînement en rotation décrit et revendiqué dans la demande de base. L'entraînement des cages est assuré par un moteur hydraulique 72 entraînant une couronne 74 par l'intermédiaire d'une courroie 75 et d'une poulie 73; celui des scies est assuré par un moteur 71 Les sens de rotation des cages et des scies sont symbolisés par les flèches Rc et Rs à la figure 4. Les deux moteurs 71, 72, sont fixés sur le bras 64 du support 60.

Le module ameneur ou d'alimentation 40 comprend un empilage d'outils-ameneurs 42 (ou ameneurs 42) sur un arbre 41A, ces outils 42 présentant chacun la forme de disque.

Le module ameneur 40 est porté par un support 90 pivotable autour d'un axe 91. Seuls les bras de dessous 93 et de dessus 94 sont représentés à la figure 3 A la fig 5 un montant 92 reliant les deux bras est partiellement représenté.

Les ameneurs 42 sont soumis à un entraînement en rotation soit de type classique, c'est-à-dire continu, soit de préférence de type analogue à celui prévu pour les cages. Cet entraînement est assuré par un moteur hydraulique 100 fixé sur le bras 94 du support 90, le sens de rotation est symbolisé par la flèche Ra à la figure 4.

Le module ameneur de base 40, formé par l'empilage des ameneurs entre les deux bras 93, 94, est complété par le dispositif 50, objet de l'invention. Ce dispositif est agencé, selon la forme d'exécution décrite, en-dessous du bras 93.

Les supports 60, 90 sont pivotables autour des axes 61, 91, ce qui permet aux modules, en cours de travail, de s'écarter de l'axe de travail W (Fig. 4) (correspondant essentiellement au rang des vignes dont la végétation est à prétailler/tailler), et de se rapprocher dudit axe W jusqu'à le dépasser, afin que les deux modules puissent interpénétrer l'un dans l'autre, comme représenté à la figure 3, grâce à un dispositif 110 comportant un vérin double-effet 111 et un tirant 115.

La figure 5 représente une demi-vue en plan de l'outil-ameneur 42 équipant le module 40, la figure 6 étant une demi-coupe selon la ligne VI - VI de la figure 5.

L'outil ameneur 42 présente la forme d'un disque comportant à la zone centrale un moyeu 47 et un alésage 48, et à la périphérie, une denture périphérique 43 particulière en ce que cette denture présente un profil globalement semblable à celui d'un engrenage. Les flancs 45 des dents sont légèrement courbes, les sommets 44 sont arrondis et l'angle β est inférieur à 90° (avantageusement de l'ordre de 80°). L'épaisseur des dents (référence 46 à la Fig. 6) est relativement importante selon l'exemple, elle est d'environ 15 mm. Les bords 46 sont parallèles à l'axe de rotation 41. Ce profil présente l'avantage de combiner une certaine agressivité juste nécessaire et suffisante pour assurer une bonne saisie de la végétation, avec une capacité de "remplissage" suffisamment importante, tout en ne causant aucun dommage aux poteaux, tendeurs et fils, et de contribuer à une bonne évacuation des sarments coupés.

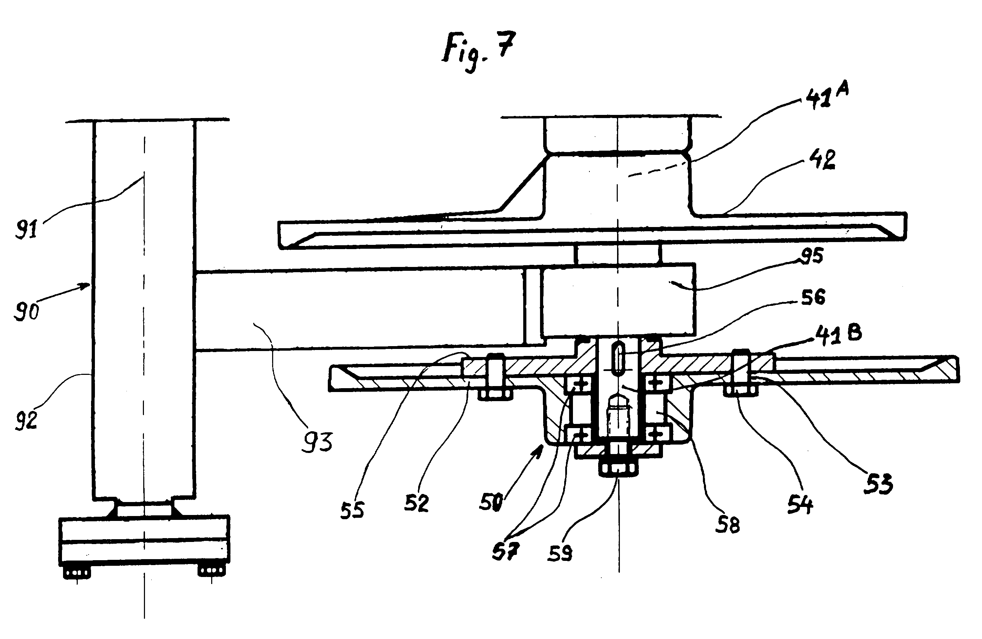

La figure 7 représente le dispositif 50 de ménagement des coursons qui, selon l'exemple décrit, est agencé dans la partie inférieure du module ameneur de base 40. Ce dispositif comprend un disque 52, analogue au disque 42, mais présentant un alésage 58 plus grand que l'alésage 48 du disque 42, et des trous 53. Bien entendu, selon des variantes possibles, le disque 52 pourrait présenter un profil différent de celui d'un disque 42. On peut également envisager toute autre forme d'outil en lieu et place d'un disque 52.

L'arbre 41A du module ameneur 40 est guidé par deux paliers 95 et 96 (fig.3) fixés en bout des bras 93 et 94 et est lié axialement. Les ameneurs sont empilés sur l'arbre 41A, liés en rotation et axialement avec ce dernier selon des modes connus, les ameneurs étant successivement disposés comme montré à la figure 3. Ils sont entraînés en rotation par l'action du moteur 100 relié à l'arbre 41A. La transmission de ce mouvement est effectuée selon des modes connus qu'il n'y a pas lieu de décrire en détail (selon l'exemple, par l'intermédiaire d'un accouplement 99 logé dans un manchon protecteur 98 (Fig. 3)).

L'arbre 41A se dégage du palier inférieur 95 d'une portion 41B. Sur ce bout d'arbre 41B est monté un flasque 55, solidaire avec cette partie 41B au moyen d'une clavette 56. Le disque 52 est rendu solidaire de ce flasque par des moyens de fixation 54 ; il est monté sur deux roulements 57. L'ensemble est tenu par des moyens 59. Ainsi, ce disque 52 est soit soumis à l'entraînement de l'arbre 41A lorsqu'il est solidaire du flasque 55, soit libre en rotation lorsqu'il est désolidarisé dudit flasque, les vis 54 ayant été retirées. De plus, il peut être facilement escamoté, c'est-à-dire retiré en le dégageant par le bas après dévissage de la vis 59.

On comprend aisément l'intérêt de ce dispositif lorsque la machine est mise en oeuvre dans les vignes de type cordon. En effet, sa faculté d'être totalement libre en rotation ménage au maximum les coursons en ne les blessant pas, alors que l'opération de tirage des sarments coupés reste assurée grâce à la rotation des disques-ameneurs supérieurs du module 40, lesquels restent soumis à un entraînement en rotation et interpénètrent dans les espaces ménagés entre les outils de coupe de module 30 (fig. 3).

Selon une variante, au lieu de l'agencement décrit, ou pourrait prévoir qu'au moins un disque-ameneur, analogue au disque 52 ou non, fasse partie du module 40, c'est-à-dire que ce ou ces disques débrayables soient aménagés juste au-dessus du bras 93. Bien sûr, dans ce cas, il(s) ne serait (seraient) pas escamotable(s).

On note enfin qu'un dispositif 50 tel que décrit est envisageable sur des prétailleuses dont la tête de coupe n'est composée que d'ensembles de coupe.

## Revendications

1. Machine de coupe utilisable notamment pour la taille ou prétaille de vignes palissées comprenant au moins une tête de coupe présentant chacune deux modules, l'un étant un module de coupe comportant une pluralité d'outils de coupe superposés et disposés autour d'un arbre, l'autre module étant, soit un autre module de coupe comportant une pluralité d'outils de coupe superposés, soit un module-ameneur (40) comportant une pluralité d'outils-ameneurs superposés et disposés autour d'un arbre, chaque empilage d'outils d'un module étant agencé dans un support pivotable autour d'un axe parallèle à l'axe du module, chaque outil de coupe comportant un élément extérieur en forme de cage (33) ayant une aptitude à un mouvement de rotation et un élément intérieur logé dans ladite cage, cet élément intérieur étant formé d'un organe de coupe (32), chaque outil-ameneur (42) présentant la forme d'un disque à denture périphérique et ayant une aptitude à un mouvement de rotation, les cages, d'une part, et les outils-ameneurs, d'autre part, étant solidaires entre elles/eux, et les outils d'un module pouvant interpénétrer dans des espaces correspondants ménagés entre les outils de l'autre module grâce à l'action d'au moins un vérin ou moyens équivalents, caractérisée par un dispositif (50) de ménagement des coursons comprenant au moins un outil (52) agencé dans la partie inférieure d'un module de façon à pouvoir être soumis au même entraînement en rotation que celui des cages ou des ameneurs situé(e)s au-dessus de lui ou débrayé de cet entraînement pour être libre(s) en rotation.

2. Dispositif selon la revendication 1, caractérisé en ce qu'au moins un outil (52) est agencé sous un bras inférieur (93) du support du module correspondant.

3. Dispositif selon la revendication 1 ou 2, caractérisé en ce qu'il comporte un flasque (55) lié à un arbre d'entraînement en rotation des cages ou des ameneurs du module correspondant et en ce que l'outil ou les outils (52) peut (peuvent) être lié(s) au flasque (55), ou en être désolidarisé(s).

4. Dispositif selon l'une des revendications 1 à 3, caractérisé en ce que l'outil (52) présente la forme générale d'un disque dont la périphérie peut présenter une denture.

5. Dispositif selon la revendication 1, caractérisé en ce qu'au moins un outil (52) est disposé au-dessus du bras inférieur du support d'un module.

## Patentansprüche

1. Schneidmaschine, insbesondere zum Beschneiden oder Vorbeschneiden von anspalierten Weinreben, mit mindestens einen Schneidkopf mit jeweils zwei Modulen, wobei das eine ein Schneidmodul mit einer Vielzahl von übereinander gelagerten und um eine Welle herum angeordneten Schneidwerkzeugen ist, und das andere Modul entweder ein weiteres Schneidmodul mit einer Vielzahl von übereinander gelagerten Schneidwerkzeugen, oder ein Zuleitungsmodul (40) mit einer Vielzahl von übereinander gelagerten und um eine Welle herum angeordneten Zuleitungswerkzeugen ist, wobei jeder Werkzeugstapel in einem um eine zur Modulachse parallel verlaufenden Achse herum drehbaren Träger vorgesehen ist, wobei jedes Schneidwerkzeug ein äußeres, käfigförmiges, rotationsfähiges Element (33) umfaßt und ein in dem besagten Käfig vorgesehenes Element, wobei dieses interne Element aus einem Schneidorgan (32) besteht, wobei jedes Zuleitungswerkzeug (42) die Form einer Scheibe mit umlaufenden Zähnen aufweist und rotationsfähig ist, wobei die Käfige einerseits und die Zuleitungswerkzeuge andererseits miteinander verbunden sind, und wobei die Werkzeuge eines Moduls in entsprechende, zwischen den Werkzeugen des anderen Moduls vorgesehene Freiräume eingreifen können, und zwar dank der Wirkung mindestens eines Zylinders oder ähnlicher Mittel, gekennzeichnet durch eine Schutzvorrichtung (50) der kurzen Zweige, mit mindestens einem derart im unteren Teil eines Moduls vorgesehenen Werkzeug (52), daß es mit dem gleichen Rotationsantrieb beaufschlagt werden kann wie derjenige der Käfige oder Zuleiter, die sich über ihm befinden, oder abgekoppelt von diesem Antrieb ist, um sich frei drehen zu können.

2. Vorrichtung nach Anspruch 1, dadurch gekennzeichnet, daß mindestens ein Werkzeug (52) unter einem unteren Arm (93) des Trägers des entsprechenden Moduls vorgesehen ist.

3. Vorrichtung nach Anspruch 1 oder 2, dadurch gekennzeichnet, daß sie einen Flansch (55) umfaßt, der mit einer Rotationsantriebswelle der Käfige oder Zuleiter des entsprechenden Moduls verbunden ist, und daß das Werkzeug oder die Werkzeuge (52) mit dem Flansch (55) verbunden oder von ihm unabhängig sein kann (können).

4. Vorrichtung nach einem der Ansprüche 1 bis 3, dadurch gekennzeichnet, daß das Werkzeug (52) eine allgemeine Scheibenform aufweist, deren Rand Zähne aufweisen kann.

5. Vorrichtung nach Anspruch 1, dadurch gekennzeichnet, daß mindestens ein Werkzeug (52) über dem unteren Arm des Trägers eines Moduls angeordnet ist.

## Claims

1. Cutting machine that can be used notably for the pruning or pre-cutting of nailed up vines, that comprises at least one cutting head, each having two modules, one being a cutting module comprising a plurality of superimposed cutting tools arranged around a shaft, the other module being, either another cutting module comprising a plurality of superimposed cutting tools or a presenting module (40) comprising a plurality of superimposed presenting tools arranged around a shaft, each stack of tools on a module being fitted into a support that can pivot about an axis parallel to the axis of the module, each cutting tool comprising an external member in the form of a cage (33) having the ability to move in rotation and an internal member housed in said cage, this internal member being formed from a cutting device (32), each presenting tool (42) having the shape of a disc with peripheral teeth and having the ability to move in rotation, the cages, on the one hand, and the presenting tools on the other hand being integral one to another, and the tools of one module being capable of interpenetrating into corresponding spaces arranged between the tools of the other module due to the action of at least one lifting screw or equivalent means, characterized by a device (50) for arranging the shoots that are left, comprising at least one tool (52) fitted to the lower part of a module in such a way that it is able to be subjected to the same rotational drive as the cages or presenting tools situated above it or is able to be disengaged from this drive in order to be free in rotation.

2. Device according to Claim 1, characterized in that at least one tool (52) is fitted under a lower arm (93) of the support of the corresponding module.

3. Device according to Claim 1 or 2, characterized in that it comprises a flange (55) connected to a shaft for driving the cages or the presenting tools of the corresponding module in rotation and in that the tool or the tools (52) can be connected to the flange (55) or be disengaged from it.

4. Device according to one of Claims 1 to 3, characterized in that the tool (52) has the general shape of a disc, the periphery of which can have teeth.

5. Device according to Claim 1, characterized in that at least one tool (52) is arranged above the lower arm of the support of a module.
